# EUROPÄISCHE PATENTSCHRIFT

(11) **EP 3 126 652 B1**
(45) Veröffentlichungstag und Bekanntmachung des Hinweises auf die Patenterteilung: **12.12.2018**
(21) Anmeldenummer: 15716414.6
(22) Anmeldetag: 05.03.2015
(51) Int. Cl.: F02D 13/06, F02D 17/02, F02D 41/00, F01L 13/00

(54) **VERBRENNUNGSMOTOR MIT ALTERNIERENDER ZYLINDERABSCHALTUNG**
COMBUSTION ENGINE HAVING ALTERNATING CYLINDER DEACTIVATION
MOTEUR À COMBUSTION COMPRENANT UNE ALTERNANCE DE DÉSACTIVATION DES CYLINDRES

(30) Priorität: 02.04.2014 DE 102014206305
(43) Veröffentlichungstag der Anmeldung: 08.02.2017
(73) Patentinhaber: Schaeffler Technologies AG & Co. KG, 91074 Herzogenaurach (DE)
(72) Erfinder: SCHEIDT, Martin, 91325 Adelsdorf (DE); ELICKER, Michael, 91325 Adelsdorf (DE); LANG, Matthias, 90571 Schwaig (DE); GOLOVATAI-SCHMIDT, Eduard, 91334 Hemhofen (DE)
(86) Internationale Anmeldenummer: PCT/DE2015/200123
(87) Internationale Veröffentlichungsnummer: WO 2015/149765

(56) Entgegenhaltungen:
- EP-A1- 2 397 674
- DE-C1- 19 546 549
- JP-A- H06 207 540
- US-A1- 2012 055 444

## Beschreibung

Die Erfindung betrifft ein Verfahren zur alternierenden Zylinderabschaltung eines Drei- oder Fünfzylinder-Verbrennungsmotors im Teillastbetrieb, in dem die Gaswechselventile der abgeschalteten Zylinder deaktiviert werden.

### Hintergrund der Erfindung

Insbesondere bei Ottomotoren ist die Abschaltung einzelner Zylinder eine bewährte Möglichkeit, im Teillastbereich den Betriebspunkt der anderen Zylinder zu einem höheren Lastpunkt mit besserem Wirkungsgrad und dementsprechend günstigerem Kraftstoffverbrauch zu verlagern. Die Verbesserung des Wirkungsgrads resultiert maßgeblich aus der Entdrosselung des Ladungswechsels, so dass das erschließbare Verbrauchspotenzial grundsätzlich mit dem Hubvolumen des Motors zunimmt. Verbrennungsmotoren mit Zylinderabschaltung sind daher typischerweise großvolumige Acht- und Zwölfzylindermotoren. Im Zuge des anhaltenden Downsizing-Trends sind dennoch mittlerweile auch Vierzylindermotoren mit Zylinderabschaltung am Markt - siehe beispielsweise MTZ 03/2012 "Der 1,4-L-TSI-Ottomotor mit Zylinderabschaltung".

Darüber hinaus ist es bekannt, Verbrennungsmotoren mit ungerader Zylinderanzahl, in der Praxis also Dreizylinder- und Fünfzylinder-Reihenmotoren mit einer Zylinderabschaltung auszurüsten. Anders als bei Motoren mit gerader Zylinderanzahl würde jedoch in diesem Fall die permanente Abschaltung des- oder derselben Zylinder zu einem ungleichmäßigen Zündabstand mit entsprechender Laufunruhe führen. Wie in der DE 10 2010 037 362 A1 vorgeschlagen, ließe sich dieser Nachteil durch eine sogenannte alternierende (auch als rollierend bezeichnete) Abschaltung der Zylinder kompensieren. Dabei bleibt die Gleichmäßigkeit des Zündabstands dadurch unverändert, dass sämtliche Zylinder des Motors abschaltbar sind und dass stets jeder zweite Zylinder in der Zündfolge für ein Arbeitsspiel abgeschaltet wird. Dies führt beim Dreizylinder-Reihenmotor, der im nicht abgeschalteten Vollmotorbetrieb mit der Zündfolge 1-2-3 betrieben wird, zu der Zündfolge 1-3-2 mit 480° Kurbelwelle Zündabstand im Zylinderabschaltbetrieb. Analog ergibt sich für den Fünfzylindermotor mit der Zündfolge 1-2-4-5-3 die Abschaltzündfolge 1-4-3-2-5 mit 288° Zündabstand.

Auch die sich daraus ergebenden Vorteile, dass die Ventilbetätigung während des oder der abgeschalteten Arbeitsspiele des betreffenden Zylinders deaktiviert wird und folglich die Gaswechselventile geschlossen bleiben, sind bekannt. So schlägt die eingangs zitierte DE 10 2010 037 362 A1 vor, die abgeschalteten Zylinder bei geschlossenen Gaswechselventilen und eingeschlossener Luft zu betreiben, die im zusätzlichen Verdichtungs- und Ansaugtakt wie eine reibungsarme Luftfeder arbeitet.

Der EP 2 669 495 A1 zufolge ist es hingegen günstiger, den abgeschalteten Zylinder mit darin eingeschlossenem Abgas zu betreiben. Dabei soll das Abgas durch einen letzten Auslassventilhub mit reduziertem Öffnungsquerschnitt auf eine solche Menge begrenzt werden, dass es einerseits nicht zur Selbstzündung/Klopfen infolge eines zu hohen Zylinderdrucks kommt und dass andererseits ein unkontrolliertes Öffnen der Gaswechselventile infolge eines zu niedrigen Zylinderinnendrucks vermieden wird.

Das aus der EP 0 779 427 A2 bekannte Abschaltverfahren komprimiert ebenfalls eingeschlossenes Abgas, wobei sowohl beim Abschalten als auch beim nachfolgenden Zuschalten des Zylinders immer zuerst der Auslass und dann der Einlass deaktiviert beziehungsweise reaktiviert wird. Das im Zylinder eingeschlossene heiße Abgas soll ein unerwünschtes Auskühlen des Zylinders verhindern, und das Reaktivieren des Auslassventils vor dem Einlassventil verhindert eine für die nachfolgende Verbrennung ungünstige Vermischung des im Zylinder verbliebenen Abgases mit Frischluft. Ein weiteres Beispiel für ein ähnliches Abschaltverfahren ist in DE 19546549 dargestellt.

### Aufgabe der Erfindung

Der vorliegenden Erfindung liegt die Aufgabe zugrunde, ein Verfahren zur alternierenden Zylinderabschaltung eines Drei- oder Fünfzylinder-Verbrennungsmotors anzugeben, durch das sich der Teillastverbrauch des Motors weiterhin senken lässt.

### Zusammenfassung der Erfindung

Die Lösung dieser Aufgabe ergibt sich dadurch, dass die Ventildeaktivierung der abgeschalteten Zylinder mit der Deaktivierung und der nachfolgenden Reaktivierung der Einlassventile dieser Zylinder jeweils anfangs deren regulären Ansaugtakts beginnt beziehungsweise endet. Anders als bei den bekannten Steuerzeiten zur Deaktivierung der Gaswechselventile, bei denen der abgeschaltete Zylinder mit Frischluft oder Abgas gefüllt ist und diese Füllung erst komprimiert und dann expandiert, sieht das erfindungsgemäße Verfahren einen Zylinderabschaltbetrieb vor, in dem der jeweils abgeschaltete Zylinder in weitgehend entleertem Zustand betrieben wird. Bei stark vereinfachender Betrachtung, bei der die durch das Kompressionsvolumen und die Ventilschließzeiten bedingte Zylinderrestfüllung vernachlässigt ist, wird der abgeschaltete Zylinder also unter darin eingeschlossenem Vakuum betrieben.

Vergleichende Simulationen der Anmelderin haben gezeigt, dass dieses Verfahren der alternierenden Zylinderabschaltung das mit Abstand größte Kraftstoffverbrauchspotenzial bietet. Wesentliche Ursachen hierfür sind die äußerst geringen Wandwärme- und Blow-by-Verluste, die ansonsten mit dem Verdichten und Entspannen von Abgas oder Frischluft einhergehen und den mit der Zylinderabschaltung erzielten Wirkungsgradvorteil in erheblichem Umfang kompensieren.

Außerdem sollen die Einlassventile der abgeschalteten Zylinder unmittelbar vor deren Deaktivierung mit einem variabel einstellbaren Zusatzhub innerhalb desjenigen Kurbelwellenwinkelbereichs geöffnet werden, in dem der reguläre Ausschiebetakt dieser Zylinder liegt. Durch das optionale, zusätzliche Öffnen der Einlassventile im Ausschiebetakt wird der nachfolgenden Abschaltung dieses Zylinders eine interne Abgasrückführung (AGR) überlagert, indem ein Teil des Abgases in den Einlasskanal ausgeschoben und dort bis zum nächsten Ansaugtakt vorgelagert wird.

Die im jeweils abgeschalteten Zylinder eingeschlossene Restgasmenge kann alternativ auch durch frühes Auslassschließen (FAS) eingestellt werden. Die Steuerzeiten der abgeschalteten Zylinder werden dann so eingestellt, dass die Auslassventile vor dem Ladungswechsel-OT (oberer Totpunkt) und vor der Deaktivierung der Einlassventile dieser Zylinder schließen.

Als weitere Alternative zur Einstellung der im abgeschalteten Zylinder eingeschlossenen Restgasmenge besteht auch die Möglichkeit des späten Auslassschließens (SAS) nach dem Ladungswechsel-OT, wobei ein Teil des ausgeschobenen Abgases wieder rückgesaugt wird.

Die für die Deaktivierung und Reaktivierung der Gaswechselventile erforderliche Mechanik kann grundsätzlich mit allen bekannten Ventiltrieben realisiert werden, die eine vollständige Stilllegung der Ventile erlauben. Im Hinblick auf die vergleichsweise hochfrequente Aktivierung und Reaktivierung sind elektrohydraulische Ventiltriebe prädestiniert, da diese extrem schnell und folglich zyklustreu schaltend ausgebildet sind und über die Stilllegung der Gaswechselventile hinaus auch die vollvariable Einstellung des Ventilhubs und der Ventilsteuerzeiten ermöglichen. Falls sowohl der einlassseitige als auch der auslassseitige Ventiltrieb vollvariabel ist, lässt sich zum einen die betriebspunktverlagernde Zylinderabschaltung mit einer drosselfreien Laststeuerung kombinieren (bekanntlich erfolgt dort die Quantitätsregelung hauptsächlich über den Öffnungsquerschnitt der Einlassventile und weniger über die Drosselklappenstellung), und zum anderen kann auch auslassseitig die FAS-Steuerzeit vollvariabel eingestellt werden. Elektrohydraulische Ventiltriebe, die sich hierfür eignen, sind nicht nur aus zahlreichen Literaturstellen bekannt, sondern auch beim Automobilhersteller FIAT unter der Bezeichnung 'Mulitair' oder 'Twinair' am Markt.

Als weiterführende Patentliteratur sei an dieser Stelle die EP 1 321 634 A2 genannt, die einen Fünfzylinder-Reihenmotor mit elektrohydraulischer Ventilsteuerung, alternierender Zylinderabschaltung und interner Abgasrückführung offenbart. Die elektrohydraulische Ventilsteuerung betätigt die Einlassventile, während die Stilllegung der Auslassventile mit vergleichsweise einfachen An/Aus-Nockenschaltern realisiert werden kann. Weiterführende Details zu der oben erwähnten Option der internen AGR sind der EP 2 397 674 A1 zu entnehmen, die eine elektrohydraulische Ventilsteuerung mit einem variabel einstellbaren Einlasshub im Ausschiebetakt für einen Verbrennungsmotor mit Zylinderabschaltung offenbart.

Der Vollständigkeit halber sei erwähnt, dass jeder Verbrennungsmotor mit n Zylindern mit dem erfindungsgemäßen Verfahren betrieben werden kann, wenn jeder p-te Zyklus in der Zündfolge befeuert wird und wenn n und p teilerfremd sind, so dass jeder Zylinder zyklisch ab- und zugeschaltet wird. Dabei ist es auch nicht zwangsweise erforderlich, dass die Zylinder bei jedem Arbeitsspiel abwechselnd ab- und zuschalten. So könnten beispielsweise der Dreizylindermotor auch in dem Modus 1-(2-3-1)-2-(3-1-2)-3-(1-2-3)-1-... und der Fünfzylindermotor im Modus 1-(2-4)-5-(3-1)-2-(4-5)-3-(1-2)-4-(5-3)-1... oder 1-(2-4-5)-3-(1-2-4)-5-(3-1-2)-4-(5-3-1)-2-(4-5-3)-1-..., etc. betrieben werden, wobei die eingeklammerten Zylinder abgeschaltet sind. Selbstverständlich ist die Erfindung auch weder auf die Anwendung bei Reihenmotoren noch bei Mehrventilmotoren beschränkt.

### Kurze Beschreibung der Zeichnungen

Weitere Merkmale der Erfindung ergeben sich aus der nachfolgenden Beschreibung und aus den Zeichnungen, in denen drei Ausführungsbeispiele des erfindungsgemäßen Verfahrens jeweils anhand der Steuerzeiten eines der abgeschalteten Zylinder dargestellt sind. Es zeigen:
- Figur 1: das bekannte Verfahren, bei dem die abgeschalteten Zylinder mit darin eingeschlossenem Abgas betrieben werden;
- Figur 2: das bekannte Verfahren, bei dem die abgeschalteten Zylinder mit darin eingeschlossener Frischluft betrieben werden;
- Figur 3: das erste Ausführungsbeispiel des erfindungsgemäßen Verfahrens, bei dem die abgeschalteten Zylinder in quasi entleertem Zustand betrieben werden;
- Figur 4: in vergleichender Gegenüberstellung den simulierten Kraftstoffverbrauch eines 1-L Dreizylindermotors im Referenzpunkt n=2000 rpm, pme=2bar für verschiedene Zylinderabschaltverfahren;
- Figur 5: das zweite Ausführungsbeispiel des erfindungsgemäßen Verfahrens, bei dem die Auslassventile der abzuschaltenden Zylinder früh schließen (FAS);
- Figur 6: das dritte Ausführungsbeispiel des erfindungsgemäßen Verfahrens, bei dem die abzuschaltenden Zylinder mit einer erweiterten AGR betrieben werden.

### Ausführliche Beschreibung der Zeichnungen

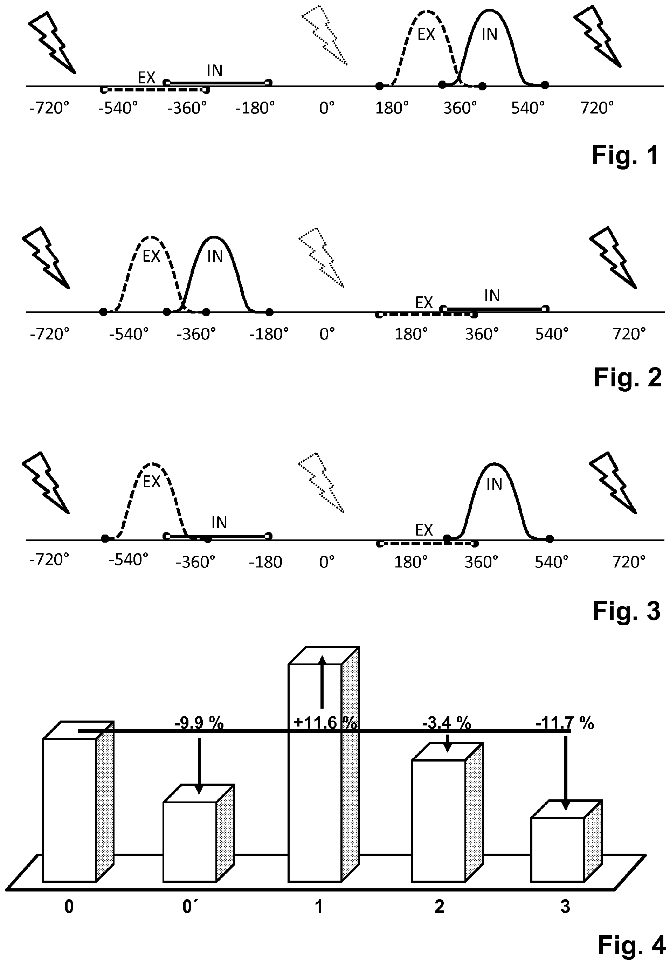

Die Erfindung sei ausgehend von den bekannten Verfahren der alternierenden Zylinderabschaltung erläutert, bei denen die Zylinder im abgeschalteten Zustand entweder gemäß Figur 1 unter Einschluss von Abgas oder gemäß Figur 2 unter Einschluss von Frischluft betrieben werden. Aufgetragen sind jeweils der Ventilhub EX des Auslassventils (gestrichelte Linie) und IN des Einlassventils (durchgezogene Linie) eines der Zylinder über zwei Arbeitsspielen des Verbrennungsmotors zwischen -720° und +720° Kurbelwellenwinkel. Die waagerechten Ventilhublinien kennzeichnen den Kurbelwellenwinkel, innerhalb dessen die Gaswechselventile gegenüber ihrer (aktivierten) regulären Ventilerhebung deaktiviert sind und folglich geschlossen bleiben. Die jeweils am Zünd-OT eingezeichneten Blitze geben an, ob die Verbrennung im Zylinder stattfindet oder nicht. Wie es durch den mit dünner und gepunkteter Linie dargestellten Blitz symbolisiert ist, ist der Zylinder bei 0° abgeschaltet.

Figur 1: Die Ventildeaktivierung der abgeschalteten Zylinder beginnt mit der Deaktivierung des oder der Auslassventile dieser Zylinder und endet mit der nachfolgenden Reaktivierung der Auslassventile dieser Zylinder. Mit anderen Worten werden immer zuerst die Auslassventile der abzuschaltenden Zylinder deaktiviert und anschließend reaktiviert. Das im abgeschalteten Zylinder eingeschlossene Abgas wird während des Abschaltzyklus zweimal komprimiert und expandiert, wobei wirkungsgradverringernde Wandwärme- und Blow-by-Verluste entstehen.

Figur 2: Auch in diesem Fall werden stets zuerst die Auslassventile deaktiviert und anschließend reaktiviert. Jedoch ist die Reihenfolge dieser Aktivierung bezüglich des abgeschalteten Zünd-OT zu dem Verfahren gemäß Figur 1 umgekehrt, so dass nun der abgeschaltete Zylinder zweimal Frischluft komprimiert und expandiert. Auch dieses Verfahren geht mit wirkungsgradverringernden Wandwärme- und Blow-by-Verlusten einher.

Bei dem erfindungsgemäßen Zylinderabschaltverfahren gemäß Figur 3 werden die Steuerzeiten der abzuschaltenden Zylinder jeweils so eingestellt, dass die Ventildeaktivierung jeweils mit der Deaktivierung des oder der Einlassventile am Anfang des regulären Ansaugtakts dieser Zylinder beginnt und mit der Reaktivierung der Einlassventile am Anfang des nachfolgenden regulären Ansaugtakts endet. Anders als bei den bekannten Verfahren werden also in diesem Fall stets zuerst die Einlassventile deaktiviert und anschließend reaktiviert, wobei der dem abgeschalteten Zünd-OT vorangehende "Ladungswechsel" im wesentlichen mit Ausschieben von Abgas, aber ohne Ansaugen von Frischluft erfolgt, und wobei der dem abgeschalteten Zünd-OT nachfolgende Ladungswechsel im wesentlichen ohne Ausschieben von Abgas, aber mit Ansaugen von Frischluft erfolgt. Dazwischen wird die eingeschlossene Restgasmenge zweimal aufeinanderfolgend jeweils erst expandiert und anschließend komprimiert. Bei der Restgasmenge handelt es sich um die geringe Abgasmenge, die der Zylinder beim Auslassschließen - der Schließzeitpunkt liegt bei diesem Ausführungsbeispiel nach dem Ladungswechsel-OT - einschließt.

Das Balkendiagramm (Figur 4) zeigt simulierte Kraftstoffverbräuche eines 1,0 L-Reihendreizylindermotors in dem typischen Referenzpunkt mit der Drehzahl n=2000 rpm und dem effektiven Mitteldruck pme=2bar. Der mit 0 bezeichnete Balken entspricht dem Basisbetrieb ohne Zylinderabschaltung bei einem relativen Verbrauch von 100%.

Der mit 0' bezeichnete Balken stellt den Verbrauch des Motors dar, wenn der zweite Zylinder permanent abgeschaltet ist. Der mit knapp 10% bereits sehr günstige Minderverbrauch ist dennoch nicht praxisrelevant, da die Laufunruhe einer solchen Zylinderabschaltung nicht nur unakzeptabel groß ist, sondern voraussichtlich auch zu einem frühzeitigen Schwingbruch der Kurbelwelle führt.

Der Balken 1 steht für das bekannte Verfahren gemäß Figur 1, bei dem die mit Zündabstand 480° alternierend abgeschalteten Zylinder unter Einschluss von Abgas betrieben werden. Die oben erläuterten Wirkungsgradverluste überkompensieren die verbrauchsreduzierende Entdrosselung infolge der Zylinderabschaltung und bewirken sogar einen Mehrverbrauch von 11,6%.

Der Balken 2 spiegelt das bekannte Verfahren gemäß Figur 2 wieder, bei dem die mit Zündabstand 480° alternierend abgeschalteten Zylinder unter Einschluss von Frischluft betrieben werden. Hier ergibt sich bei akzeptabler Motorlaufruhe ein Verbrauchsvorteil von 3,4%.

Der Balken 3 verdeutlicht mit knapp 12% den signifikanten Verbrauchsvorteil des erfindungsgemäßen Verfahrens gemäß Figur 3, bei dem die mit Zündabstand 480° alternierend abgeschalteten Zylinder quasi unter Einschluss von Vakuum betrieben werden.

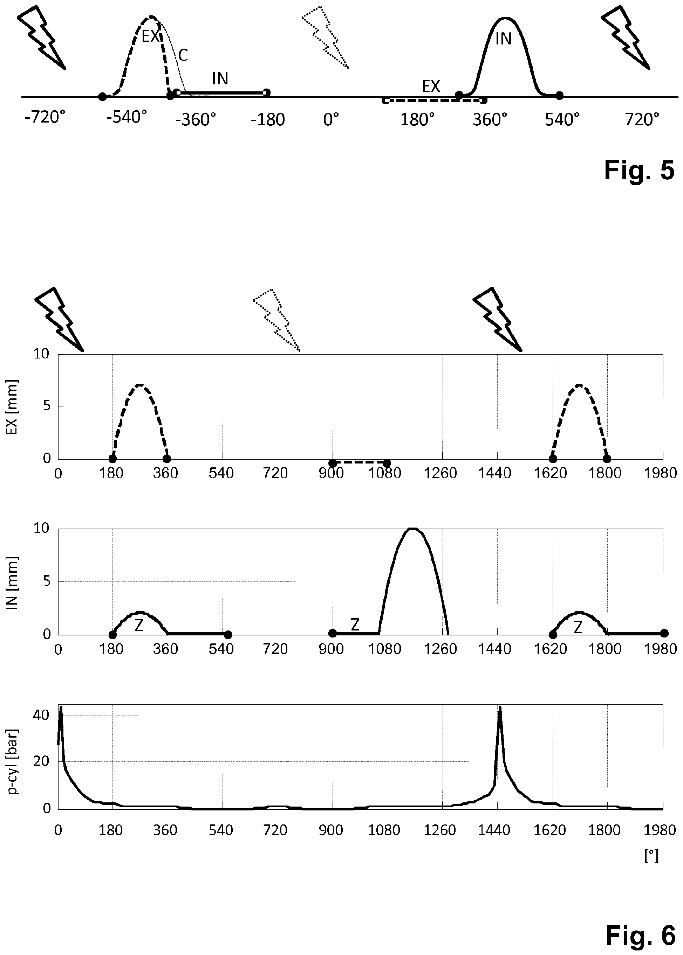

Bei dem zweiten Ausführungsbeispiel des erfindungsgemäßen Verfahrens gemäß Figur 5 werden die Auslassventile durch einen elektrohydraulischen Ventiltrieb vollvariabel hubbetätigt. Dabei wird die zwischen dem betätigenden Auslassnocken und dem zugehörigen Auslassventil eingespannte Hydraulik so abgesteuert, dass das Auslassventil vor dem Ladungswechsel-OT und dem regulären Öffnungszeitpunkt des dann deaktivierten Einlassventils frühzeitig schließt. Dies ist durch den wesentlich früheren Schließzeitpunkt des mit dicker Linie dargestellten Auslasshubs EX gegenüber der mit dünner Linie dargestellten Hüllkurve C des Auslassnockens als Maß für den maximal möglichen Auslasshub verdeutlicht. Die im abgeschalteten Zylinder mit dieser FAS-Steuerzeit eingestellte Restgasmenge wird anschließend, wie zuvor erläutert, zweimal verlustarm expandiert und komprimiert.

Das in Figur 6 dargestellte dritte Ausführungsbeispiel des erfindungsgemäßen Verfahrens umfasst eine erweiterte Restgassteuerung. Der Auslasshub EX und der Einlasshub IN sind hier untereinander in getrennten Diagrammen über dem Kurbelwellenwinkel aufgetragen. Auch bei diesem Ausführungsbeispiel beginnt die Ventildeaktivierung des jeweils abgeschalteten Zylinders mit der Deaktivierung des Einlasshubs IN und endet mit dessen nachfolgender Reaktivierung, und zwar jeweils beginnend mit dem regulären Ansaugtakt dieses Zylinders, in dem im wesentlichen Frischluft angesaugt wird. Die das jeweilige Einlassventil betätigende Nockenerhebung ist jedoch mit einem Zusatzhub Z versehen, der das Einlassventil unmittelbar vor dessen Deaktivierung innerhalb des regulären Ausschiebetakts dieses Zylinders, d.h. zeitgleich mit dem offenen Auslassventil öffnet. Der ebenfalls durch eine vollvariable elektrohydraulische Ventilsteuerung realisierbare Zusatzhub Z kann vollständig deaktiviert werden, wie es bis zur nachfolgenden Reaktivierung des Einlassventils am Anfang des regulären Ansaugtakts der Fall ist.

Wie bereits oben erläutert, bewirkt der Zusatzhub Z eine erweiterte interne AGR, wobei ein Teil des Abgases in den gleichzeitig mit dem Auslass- geöffneten Einlasskanal ausgeschoben und dort bis zum erneuten Ansaugen desselben Zylinders vor dem Einlassventil vorgelagert bleibt, um dann mit Frischluft angesaugt zu werden.

Der im unteren Diagramm dargestellte Druckverlauf zeigt den zum Kurbelwellenwinkel zugehörigen Zylinderinnendruck p-cyl als Absolutdruck. Dieser befindet sich während des abgeschalteten Arbeitsspiels auf einem äußerst niedrigen und kaum veränderlichen Niveau, wodurch die wirkungsgradvermindernden Wandwärme- und Blow-by-Verluste der bekannten Zylinderabschaltverfahren vermieden werden.

## Patentansprüche

1. Verfahren zur alternierenden Zylinderabschaltung eines Dreizylinder- oder Fünfzylinder-Verbrennungsmotors im Teillastbetrieb, in dem das Öffnen der Gaswechselventile der abgeschalteten Zylinder deaktiviert wird, **dadurch gekennzeichnet, dass** die Ventildeaktivierung der abgeschalteten Zylinder jeweils mit der Deaktivierung des oder der Einlassventile dieser Zylinder am Anfang deren regulären Ansaugtakts beginnt und mit der Reaktivierung des oder der Einlassventile dieser Zylinder am Anfang deren nachfolgenden regulären Ansaugtakts endet.

2. Verfahren nach Anspruch 1, **dadurch gekennzeichnet, dass** die Einlassventile der abgeschalteten Zylinder unmittelbar vor deren Deaktivierung mit einem variabel einstellbaren Zusatzhub (Z) innerhalb des Kurbelwellenwinkelbereichs geöffnet werden, in dem der reguläre Ausschiebetakt dieser Zylinder liegt.

3. Verfahren nach Anspruch 1, **dadurch gekennzeichnet, dass** die Auslassventile der abgeschalteten Zylinder vor der Deaktivierung der Einlassventile dieser Zylinder schließen.

## Claims

1. Method for the alternating cylinder deactivation of a three-cylinder or five-cylinder internal combustion engine in partial load operation, in which the opening of the gas exchange valves of the deactivated cylinders is deactivated, **characterized in that** the valve deactivation of the deactivated cylinders begins in each case with the deactivation of the inlet valve or valves of the said cylinders at the start of their regular induction stroke and ends with the reactivation of the inlet valve or valves of the said cylinders at the start of their following regular induction stroke.

2. Method according to Claim 1, **characterized in that** the inlet valves of the deactivated cylinders are opened immediately before their deactivation by way of a variably adjustable additional lift (Z) within the crankshaft angular range, in which the regular exhaust stroke of the said cylinders lies.

3. Method according to Claim 1, **characterized in that** the outlet valves of the deactivated cylinders close before the deactivation of the inlet valves of the said cylinders.

## Revendications

1. Procédé pour la coupure en alternance des cylindres d'un moteur à combustion à trois cylindres ou à cinq cylindres en mode de charge partielle, dans lequel l'ouverture des soupapes d'échange de gaz des cylindres coupés est désactivée, **caractérisé en ce que** la désactivation des soupapes des cylindres coupés commence à chaque fois avec la désactivation de la ou des soupapes d'admission de ces cylindres au début de leur temps d'admission normal et se termine avec la réactivation de la ou des soupapes d'admission de ces cylindres au début de leur temps d'admission normal suivant.

2. Procédé selon la revendication 1, **caractérisé en ce que** les soupapes d'admission des cylindres coupés sont ouvertes immédiatement avant leur désactivation avec une course supplémentaire ajustable de manière variable (Z) à l'intérieur de la plage angulaire du vilebrequin dans laquelle a lieu le temps d'expulsion normal de ces cylindres.

3. Procédé selon la revendication 1, **caractérisé en ce que** les soupapes d'échappement des cylindres coupés ferment ces cylindres avant la désactivation des soupapes d'admission.
